# EUROPÄISCHE PATENTSCHRIFT

(11) **EP 0 355 081 B1**
(45) Veröffentlichungstag und Bekanntmachung des Hinweises auf die Patenterteilung: **25.01.1995**
(21) Anmeldenummer: 89810593.7
(22) Anmeldetag: 08.08.1989
(51) Int. Cl.: H02G 3/04

(54) **Kabelverlegungskanal**
Cable installation duct
Canalisation d'installation de câbles

(30) Priorität: 17.08.1988 CH 3070/88
(43) Veröffentlichungstag der Anmeldung: 21.02.1990
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- EP-A- 0 229 544
- DE-A- 2 410 389
- DE-U- 7 120 422
- US-A- 3 161 722

## Beschreibung

Die Erfindung betrifft einen Kabelverlegungskanal für die Hausinstallation, mit im wesentlichen rechteckigem oder quadratischem Querschnitt und einer Längsöffnung zum Einlegen der Kabel, welcher Kabelverlegungskanal durch eine Gitterstruktur aus miteinander verbundenen Quer- und Längsstegen gebildet ist, wobei die Querstege den Kanalquerschnitt bestimmen und die Längsstege aussenliegende, parallele Befestigungsleisten bilden und auf mindestens drei Kanalseiten vorgesehen sind, und wobei je Kanalseite wenigstens zwei der Längsstege einen Abstand zueinander aufweisen, der gleich einem Grundmass (a) oder einem ganzzahligen Vielfachen davon ist.

Kabelverlegungskanäle dieser Art werden in mittleren und grösseren Anlagen (Mehrfamilienhäuser, Gewerbe- und Industriebauten, öffentlichen Gebäuden usw.) zur geordneten Verlegung von Kabeln und Leitungen der verschiedensten Art benötigt. Dabei wäre eine rationelle und vielseitige Montagemöglichkeit der Kanalabschnitte am Gebäude - an Decken, Wänden, Pfeilern, Konsolen usw. - sehr erwünscht, wobei natürlich die Längsöffnung am montierten Kanal immer zugänglich sein muss. Diese Anforderungen werden von bekannten Produkten, sei es in Form von Kunststoffprofilen, abgekanteten Lochblechen oder plastifizierten Drahtgittern, nur unvollkommen erfüllt.

Ein Kabelverlegungskanal der eingangs genannten Gattung ist aus der EP-A-0 229 544 bekannt. Es handelt sich dort um eine Gitterstruktur mit U-förmigem Querschnitt, die mittels Schrauben entweder am Boden oder an den seitlichen U-Schenkeln zu befestigen ist, wofür jeweils zwei nahe benachbarte Längsstege vorgesehen sind. Praktisch kommt nur die Montage in einer einzigen Lage, nämlich mit senkrechten U-Schenkeln und nach oben weisender Längsöffnung, in Frage. - Ein weiterer bekannter Kabelverlegungskanal gemäss DE-A-24 10 389 besteht aus einem extrudierten Kunststoffprofil mit im wesentlichen rechteckigem Querschnitt, wobei die Längsöffnung sich in einer Ecke des Querschnitts befindet und durch einen durchgehenden Klappdeckel verschliessbar ist.

Mit der Erfindung wird die Schaffung eines Kabelverlegungskanals angestrebt, welcher mit verschiedenen Profilformen und -Grössen (vorzugsweise als modulares System) kostengünstig hergestellt werden kann und dabei vielfältige und praxisgerechte Befestigungsmöglichkeiten bietet.

Diese Aufgabe wird erfindungsgemäss durch die kennzeichnenden Merkmale des Patentanspruches 1 gelöst. Dadurch ist es möglich, den Kabelverlegungskanal - und auch mehrere Kanäle nebeneinander - in verschiedenen Lagen und in allen praktisch vorkommenden Situationen in bezug auf das Gebäude zu montieren, wobei die Zugänglichkeit der Längsöffnung gewährleistet ist und der Innenquerschnitt des Kanals voll nutzbar ist.

Besondere Ausgestaltungen des im Patentanspruch 1 definierten Erfindungsgegenstandes sind in den abhängigen Ansprüchen 2 bis 8 angegeben. Nachstehend werden Ausführungsbeispiele des Kabelverlegungskanals gemäss der Erfindung im Zusammenhang mit der Zeichnung näher erläutert.
- Fig. 1: zeigt perspektivisch einen Kanalabschnitt, welcher als Gitterstruktur mit Längs- und Querstegen hergestellt ist,
- Fig. 2: zeigt das Kanalprofil nach Fig. 1 (in kleinerem Massstab) in verschiedenen Anordnungen bezüglich eines Gebäudes,
- Fig. 3: zeigt schematisch eine Reihe verschiedener Querschnittformen einschliesslich derjenigen nach Fig. 1, die ein modulares System, beruhend auf einem einheitlichen Abstand der Befestigungsleisten, bilden,
- Fig. 4: stellt im Schnitt eine Installationsanordnung dar mit einem mittels Hakenschiene montierten Kabelverlegungskanal,
- Fig. 5: veranschaulicht ebenfalls im Schnitt eine bevorzugte Querschnittform der Hakenschiene, welche eine Stossverbindung von zwei aneinandergereihten Kanalabschnitten ermöglicht,
- Fig. 6: zeigt schematisch, an einem als Gitterstruktur ausgeführten Kanalabschnitt, eine Möglichkeit zur Bildung von Kanalbiegungen, und
- Fig. 7: zeigt in ähnlicher Darstellung einen als Fertigteil hergestellten Kanalkrümmer.

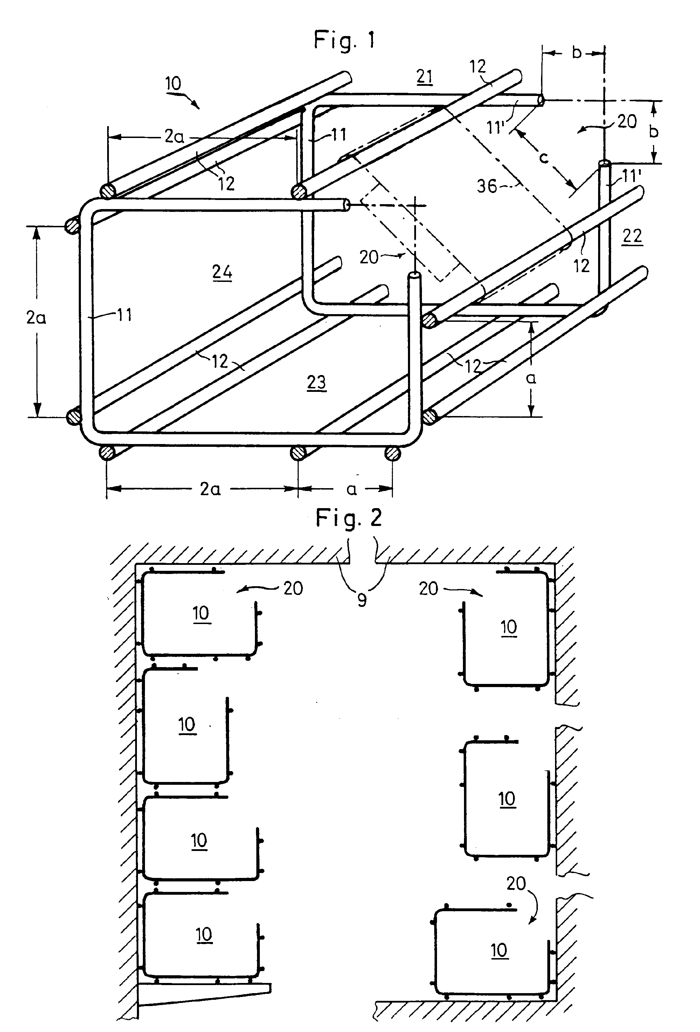

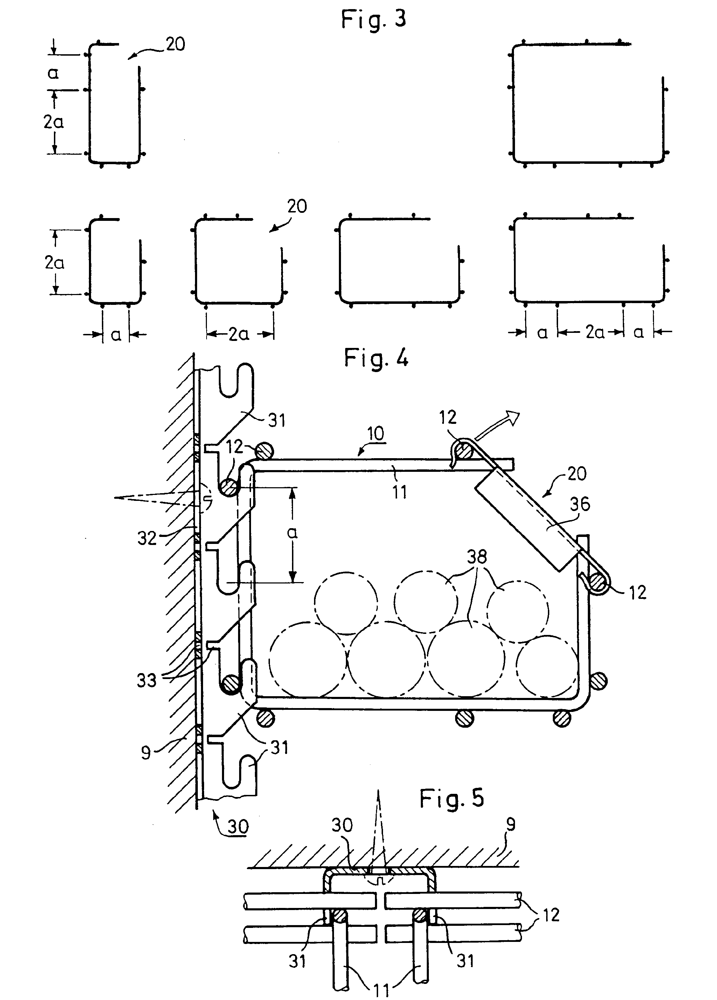

Der in Fig. 1 dargestellte Abschnitt eines Kabelverlegungskanals ist durch eine Gitterstruktur in an sich bekannter Weise gebildet, vorzugsweise aus miteinander verschweissten und plastifizierten Stahldrähten. Die parallel in Kanal-Längsrichtung verlaufenden Längsstege 12 sind in regelmässigen Abständen durch Querstege 11 verbunden, welche den hier im wesentlichen rechteckigen Kanalquerschnitt bestimmen. Wie ersichtlich, kreuzen die Längsstege 12 die Querstege 11 jeweils auf der Aussenseite des Kanals. Beim vorliegenden Beispiel befinden sich an der Kanalseite 23 drei Längsstege 12, während die übrigen Kanalseiten 21, 22 und 24 je zwei Längsstege aufweisen. Die aussenliegenden Längsstege 12 haben die Funktion von Befestigungsleisten, mit denen der Kanal am Gebäude montiert werden kann, vorzugsweise unter Verwendung von besonderen Hakenschienen, wie weiter unten anhand der Fig. 4 beschrieben wird. Aus diesem Grund sind die Abstände der jeweils an einer Kanalseite befindlichen Längsstege 12 so gewählt, dass dieser Abstand entweder einem Grundmass a entspricht (Seite 22 und Seite 23 rechts) oder einem ganzzahligen Vielfachen davon (2a, Seiten 21, 23 links und 24).

Ein wesentliches Merkmal des Kabelverlegungskanals besteht ferner darin, dass die Längsöffnung 20 zum Einlegen der Kabel in einer Ecke des Kanalquerschnittes durch Verkürzung der beiden anstossenden Kanalseiten 21 und 22 gebildet ist; im Falle der Gitterstruktur gemäss Fig. 1 kommt die Oeffnung 20 durch Verkürzung von zwei jeweils gegen eine Ecke weisenden Seitenabschnitten 11′ der Querstege 11 um ein Mass b zustande wie strichpunktiert angedeutet ist, um die Oeffnung von der Weite c zu bilden (das Mass der Verkürzung kann an den beiden Abschnitten 11′ auch unterschiedlich sein).

Wie aus der Fig. 2 hervorgeht, kann ein so beschaffener Kanal in den verschiedensten Lagen bezüglich Wänden und Decken eines Gebäudes 9 montiert werden, wobei die Längsöffnung 20 (normalerweise in einer der oberen Ecken des Querschnittes) immer zugänglich bleibt, und zwar, wie links in Fig. 2 sichtbar, auch bei dicht übereinanderliegend montierten Kanälen. Die Fig. 2 kann im übrigen auch als Horizontalschnitt durch das Gebäude 9 mit vertikal verlaufenden Kanälen 10 aufgefasst werden.

Obwohl in Fig. 2 besondere Befestigungsmittel für die Montage der Kanäle am Gebäude nicht dargestellt sind, ist erkennbar, dass die Befestigung immer an den aussenliegenden Befestigungsleisten bzw. Längsstegen 12 erfolgt. Dadurch bleibt das Innere des Kanals frei und es müssen - jedenfalls bei Verwendung von Hakenschienen gemäss Fig. 4 - auch bei der Montage keine Werkzeuge durch das Innere des Kanals hindurch geführt werden.

Unter Beibehaltung eines Abstand-Rasters zwischen den Befestigungsleisten 12 mit der Grundteilung a ist es möglich, eine Reihe von rechteckigen und quadratischen Kanalquerschnitten unterschiedlicher Grösse nach Bedarf zu bilden, von denen einige Beispiele schematisch in Fig. 3 zusammengestellt sind. Normalerweise weisen alle vier Kanalseiten je zwei oder mehr Befestigungsleisten 12 auf, jedoch kann bei schmalen Rechteckquerschnitten an der einen, an die Oeffnung 20 angrenzenden Schmalseite nur eine Befestigungsleiste vorhanden sein (links in Fig. 3). Die verschiedenen Profile nach Fig. 3 lassen sich natürlich in gleich vielfältiger Anordnung montieren, wie in Fig. 2 dargestellt.

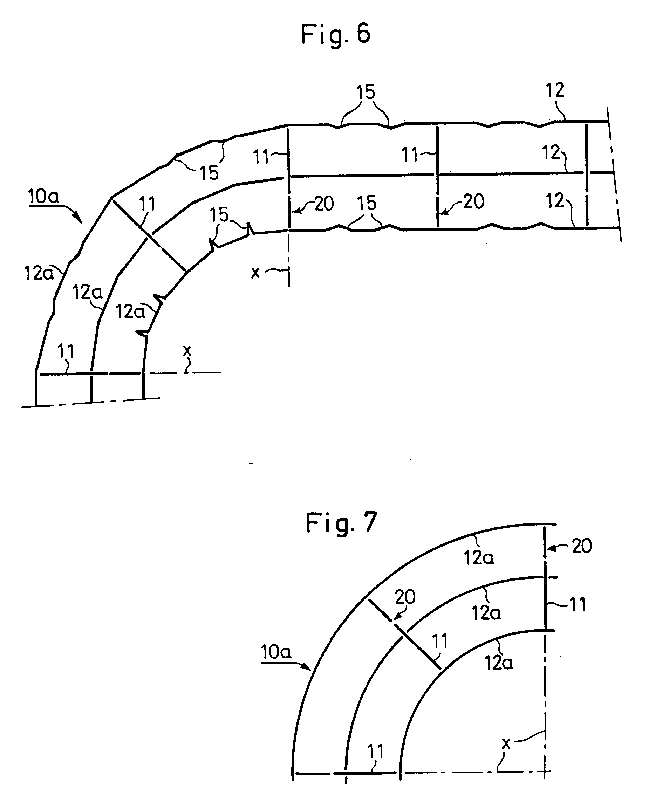

Eine besonders zweckmässige Art der Montage mit Hilfe von Montageschienen 30 geht aus den Fig. 4 und 5 hervor. Die zwecks Wandmontage mit Schlitzen 32 versehene Montageschiene 30 weist mindestens eine Reihe von Haken 31 zur Aufnahme von Befestigungsleisten 12 eines Kanals 10 auf, wobei die Haken 31 in regelmässigen Abständen entsprechend dem Grundmass a der Leistenabstände angeordnet sind. Auf diese Weise lassen sich Kanäle 10 bequem durch Einhängen von Befestigungsleisten 12 an einer beliebigen Kanalseite montieren. Es kann zweckmässig sein, die Haken 31 bzw. die von ihnen gebildeten Einhängeschlitze im Eingangsbereich leicht zu verengen, um beim Einhängen der Leisten 12 eine gewisse Rastwirkung zu erzeugen und die Kanäle 10 gegen unbeabsichtigtes Aushängen zu sichern. Es ist zweckmässig, die Montageschiene jeweils zwischen aufeinanderfolgenden Haken 31 mit Sollbruchstellen 33 zu versehen, damit Schienenstücke geeigneter Länge während der Montage leicht abgetrennt werden können.

Besonders zweckmässig ist es, gemäss Fig. 5 die Montageschiene 30 als U-Profil auszubilden, dessen Schenkel zwei parallele Reihen von Haken 31 bilden. Der Abstand zwischen den U-Schenkeln bzw. Hakenreihen kann dann gemäss Fig. 5 so bemessen werden, dass zwischen ihnen zwei Querstege 11 zweier verschiedener Kanalabschnitte eingesetzt werden können. Diese Querstege 11 bilden den Endbereich (z.B. mit leicht überstehenden Längsstegen 12) je eines Kanalabschnittes. Auf diese Weise dient die Montageschiene 30 gleichzeitig zur Wandbefestigung und als Stossverbindung zweier aneinandergereihter Kanalabschnitte.

Es wird häufig notwendig sein, im Kanal eingelegte Kabel 38 (in Fig. 4 strichtpunktiert angedeutet), gegen Herausfallen zu sichern. Zu diesem Zweck können Verschlussorgane 36, z.B. in Form von Blechbiegeteilen, vorgesehen sein, welche die Oeffnung 20 in regelmässigen Abständen überbrücken (siehe auch Fig. 1). Gemäss Fig. 4 kann ein solches Verschlussorgan 36 über den beiden die Längsöffnung 20 begrenzenden Längsstegen 12 eingehängt und in Pfeilrichtung schwenkbar sein.

Das in Fig. 6 schematisch dargestellte Ausführungsbeispiel ist ebenfalls in Form einer Gitterstruktur ausgebildet. Die Besonderheit an diesem Beispiel besteht darin, dass ein Teil der Längsstege 12 jeweils zwischen zwei Querstegen 11 in regelmässigen Abständen mit Knickungen 15 versehen ist. Diese ermöglichen es, durch zusätzliches Einknicken auf der einen Seite und Streckung auf den andern Seite einen Kanalabschnitt 10a ungefähr in die Form eines Viertelkreises zu biegen, wie es zur Führung des Kabelverlegungskanals in Raumecken oft erwünscht ist. Die Biegung kann so vorgenommen werden, dass zwei Querstege 11 in zueinander senkrechte Ebenen x zu liegen kommen, jedoch ist dies nicht zwingend. Ebenso können natürlich je nach Erfordernis der jeweiligen Installation auch andere als rechtwinklige Biegungen hergestellt werden. Die Längsöffnung 20 kann, wie in Fig. 6 angedeutet, entlang der Innenseite der Krümmung oder aber entlang der Aussenseite verlaufen.

Die Fig. 7 zeigt dagegen einen als Fertigteil hergestellten, gekrümmten Kanalabschnitt 10a, dessen Längsstege 12a im wesentlichen Viertelkreis-förmig gebogen sind und bei welchen wiederum zwei Querstege 11 in zueinander senkrechten Ebenen x liegen. Solche vorgefertigten Kanalkrümmer lassen sich besonders zweckmässig mit U-profilförmigen Montageschienen 30 gemäss Fig. 5 befestigen und mit anschliessenden (geraden oder gekrümmten) Kanalabschnitten verbinden.

Bogenstücke oder "Krümmer" dieser Art lassen sich selbstverständlich nach Bedarf horizontal wie auch vertikal einsetzen. Auch andere Formstücke, insbesondere T-förmige Abzweigstücke usw. können auf ähnliche Weise - im Querschnitt angepasst an gerade Kanalabschnitte - hergestellt werden, wobei Lage und Verlauf der durchgehenden Längsöffnung je nach Erfordernis gewählt werden können.

## Patentansprüche

1. Kabelverlegungskanal für die Hausinstallation, mit im wesentlichen rechteckigem oder quadratischem Querschnitt und einer Längsöffnung(20) zum Einlegen der Kabel (38), welcher Kabelverlegungskanal (10) durch eine Gitterstruktur aus miteinander verbundenen Quer- und Längsstegen gebildet ist, wobei die Querstege (11) den Kanalquerschnitt bestimmen und die Längsstege (12) aussenliegende, parallele Befestigungsleisten bilden und auf mindestens drei Kanalseiten vorgesehen sind, und wobei je Kanalseite (21, 22, 23 24) wenigstens zwei der Längsstege (12) einen Abstand zueinander aufweisen, der gleich einem Grundmass (a) oder einem ganzzahligen Vielfachen (2a) davon ist, dadurch **gekennzeichnet**, dass die Längsöffnung (20) in einer Ecke des Kanalquerschnittes durch Verkürzung (b) zweier jeweils gegen diese Ecke weisender Seitenabschnitte (11′) der Querstege (11) gebildet ist, und dass das Grundmass (a) durch die Haken-Abstandsteilung einer Montageschiene (30) gegeben ist, welche mindestens eine Reihe von Haken (31) zur Aufnahme der genannten Längsstege (12) aufweist.

2. Kabelverlegungskanal nach Anspruch 1, dadurch gekennzeichnet, dass die Montageschiene (30) mit Sollbruchstellen (33) jeweils zwischen aufeinanderfolgenden Haken (31) versehen ist.

3. Kabelverlegungskanal nach Anspruch 1, dadurch gekennzeichnet, dass die Montageschiene (30) ein U-Profil aufweist, dessen Schenkel zwei parallele Hakenreihen (31) bilden.

4. Kabelverlegungskanal nach Anspruch 3, dadurch gekennzeichnet, dass der Abstand zwischen den U-Schenkeln bzw. Hakenreihen (31) der Hakenschiene (30) so bemessen ist, dass zwischen ihnen zwei Querstege (11) in den Endbereichen von getrennten, aneinandergereihten Kanalabschnitten einsetzbar sind.

5. Kabelverlegungskanal nach einem der vorangehenden Ansprüche, gekennzeichnet durch die Längsöffnung überbrückende, wegnehmbare Verschlussorgane (36).

6. Kabelverlegungskanal nach einem der vorangehenden Ansprüche, dadurch gekennzeichnet, dass wenigstens ein Teil der Längsstege (12) zwischen den Querstegen (11) mit Knickungen (15) versehen ist.

7. Kabelverlegungskanal nach Anspruch 6, gekennzeichnet durch einen gekrümmten Kanalabschnitt (10a) mit im wesentlichen Viertelkreis-förmigen Längsstegen (12a) und zwei in zueinander senkrechten Ebenen (x) liegenden Querstegen (11).

8. Kabelverlegungskanal nach einem der vorangehenden Ansprüche, gekennzeichnet durch vorgefertigte Formstücke, insbesondere Viertelkreis-Bogenstücke (10a) und T-förmige Abzweigstücke, welche bezüglich Kanalquerschnitt und Lage der Längsöffnung (20) an gerade Kanalabschnitte angepasst sind.

## Claims

1. A cable installation conduit for interior wiring, having a substantially rectangular or square cross-section and a longitudinal opening (20) for inserting the cables (38), which cable installation conduit (10) is formed by a grid structure comprising transverse and longitudinal bars, wherein the transverse bars (11) determine the conduit cross-section and the longitudinal bars (12) form externally situated, parallel, fastening strips and are provided on at least three conduit sides, and wherein at least two of the longitudinal bars (12) on each conduit side (21, 22, 23, 24) are at a distance from each other which is equal to a basic dimension (a) or an integral multiple (2a) thereof, characterised in that the longitudinal opening (20) is formed in a corner of the conduit cross-section by shortening (b) two side sections (11′) of the transverse bars (11) which each point towards this corner, and that the basic dimension (a) is determined by the hook spacing of a mounting rail (30) which has at least one row of hooks (31) for receiving the said longitudinal bars (12).

2. A cable installation conduit according to claim 1, characterised in that the mounting rail (30) is provided with predetermined breaking points (33) between successive hooks (31) in each case.

3. A cable installation conduit according to claim 1, characterised in that the mounting rail (30) has a U-shaped section, the limbs of which form two parallel rows of hooks (31).

4. A cable installation conduit according to claim 3, characterised in that the distance between the limbs of the U or between the rows of hooks (31) of the hook rail (30) is designed so that two transverse bars (11) in the end regions of separate conduit sections disposed in series can be inserted between them.

5. A cable installation conduit according to any one of the preceding claims, characterised by removable closure elements (36) spanning the longitudinal opening.

6. A cable installation conduit according to any one of the preceding claims, characterised in that at least a portion of the longitudinal bars (12) is provided with buckling points (15) between the transverse bars (11).

7. A cable installation conduit according to claim 6, characterised by a curved conduit section (10a) with substantially quadrant-shaped longitudinal bars (12a) and two transverse bars (11) lying in mutually perpendicular planes (x).

8. A cable installation conduit according to any one of the preceding claims, characterised by prefabricated shaped parts, particularly quadrant-shaped bend pieces (10a) and T-shaped branch pieces which are fitted to straight conduit sections with regard to the conduit cross-section and the location of the longitudinal opening (20).

## Revendications

1. Caniveau de pose de câbles, pour mise en place intérieure, à section transversale essentiellement rectangulaire ou carrée et comportant une ouverture longitudinale (20) permettant la mise en place des câbles (38), ce caniveau de pose de câbles (10) étant constitué d'une structure de grille formée de tiges transversales et de tiges longitudinales réunies entre elles, les tiges transversales (11) déterminant la section transversale du caniveau, tandis que les tiges longitudinales (12) constituent des barres de Fixation parallèles et situées à l'extérieur et sont prévues sur au moins trois faces du caniveau, au moins deux des tiges longitudinales (12) étant, sur chacun des côtés (21, 22, 23, 24) du caniveau, situées à une distance mutuelle qui est égale à une valeur de base (a) ou à un multiple entier (2a) de cette valeur de base, caractérisé en ce que l'ouverture longitudinale (20) est formée dans un angle de la section transversale du caniveau par raccourcissement (b), pour chacune des tiges transversales (11), de deux tronçons de face (11′) de la tige transversale (11) qui se dirigent vers cet angle et en ce que la valeur de base (a) est déterminée par le pas d'espacement des crochets d'un rail de montage (30) qui comporte au moins une rangée de crochets (31) destinés à recevoir lesdites tiges longitudinales (12).

2. Caniveau de pose de câbles selon la revendication 1, caractérisé en ce que le rail de montage (30) est pourvu de zones de rupture obligée (33) entre chaque paire formée de deux crochets (31) disposés à la suite l'un de l'autre.

3. Caniveau de pose de câbles selon la revendication 1, caractérisé en ce que le rail de montage (30) comprend un élément profilé en U dont les ailes forment deux rangées parallèles de crochets (31).

4. Caniveau de pose de câbles selon la revendication 3, caractérisée en ce que l'espacement entre les ailes du U, ou les rangées de crochets (31), des rails à crochets (30) a une valeur telle qu'entre elles, il est possible de placer deux tiges transversales (11) situées dans les zones d'extrémité de tronçons de caniveau séparés et disposés à la suite l'un de l'autre.

5. Caniveau de pose de câbles selon l'une des revendications précédentes, caractérisé par des organes de fermeture (36) amovibles qui couvrent l'ouverture longitudinale.

6. Caniveau de pose de câbles selon l'une des revendications précédentes, caractérisé en ce qu'au moins une partie des tiges longitudinales (12) est pourvue de zones pliées entre les tiges transversales (11).

7. Caniveau de pose de câbles selon la revendication 6, caractérisé par un tronçon de caniveau (10a) cintré comportant des tiges longitudinales (12a) essentiellement en forme de quart de cercle et deux tiges transversales (11) situées dans des plans (x) perpendiculaires entre eux.

8. Caniveau de pose de câbles selon l'une des revendications précédentes, caractérisé par des pièces conformées préfabriquées, notamment des pièces cintrées en quart de cercle (10a) et des pièces d'embranchement en forme de T, qui, en ce qui concerne la section transversale de caniveau et la position de l'ouverture longitudinale (20), sont adaptées à des tronçons de caniveau rectilignes.
